# EUROPÄISCHE PATENTSCHRIFT

(11) **EP 2 664 428 B1**
(45) Veröffentlichungstag und Bekanntmachung des Hinweises auf die Patenterteilung: **23.03.2016**
(21) Anmeldenummer: 12168220.7
(22) Anmeldetag: 16.05.2012
(51) Int. Cl.: B29C 33/06, H05B 6/14, B29C 51/22, B29C 51/42

(54) **Siegelwalze**
Sealing roller
Cylindre de scellement

(43) Veröffentlichungstag der Anmeldung: 20.11.2013
(73) Patentinhaber: UHLMANN PAC-SYSTEME GmbH & Co. KG, 88471 Laupheim (DE)
(72) Erfinder: Gertitschke, Detlev, 88471 Laupheim (DE); Lehmann, Robert, 79194 Gundelfingen (DE); Liebhardt, Jürgen, 88471 Laupheim (DE)
(74) Vertreter: Wächter, Jochen

(56) Entgegenhaltungen:
- EP-A1- 2 664 428
- DE-A1- 3 416 353
- US-A- 2 273 423
- US-A- 2 912 556
- US-A- 4 657 625
- DATABASE WPI Week 198243 Thomson Scientific, London, GB; AN 1982-91118E XP002688796, -& JP 57 149616 A (KISHIMOTO A) 16. September 1982 (1982-09-16)
- DATABASE WPI Week 201009 Thomson Scientific, London, GB; AN 2010-A85234 XP002688797, -& JP 2010 015695 A (SUMITOMO ELECTRIC IND LTD) 21. Januar 2010 (2010-01-21)

## Beschreibung

Die vorliegende Erfindung betrifft eine erwärmbare Siegelwalze.

Erwärmbare Siegelwalzen werden beispielsweise zum kontinuierlichen Versiegeln von Blisterverpackungen für kleine pharmazeutische Produkte verwendet. Zum Schutz der empfindlichen pharmazeutischen Produkte müssen die Blisterverpackungen dicht verschlossen sein, weshalb an den Siegelprozess besonders hohe Anforderungen gestellt werden. Standardmäßig wird eine mit Heißsiegellack beschichtete Aluminiumdeckfolie mit einer PVC-Bodenfolie, in deren Blisternäpfen die pharmazeutischen Produkte aufgenommen sind, mittels Hitze und Druck dicht versiegelt. Für die Ausgestaltung der erwärmbaren Siegelwalzen existiert eine Vielzahl unterschiedlicher Möglichkeiten.

Eine typische Konstruktion verwendet in die Siegelwalze eingeführte rohrförmige Heizpatronen. Die Nachteile einer derartigen Konstruktion, bei der die Übertragung der Messsignale und Versorgungsspannung für die Heizpatronen über Schleifringe erfolgt, liegen zum einen in der Korrosion der Schleifringe durch PVC-Gase und deren Verschleiß, was zu unkontrollierten Aussetzern der Messsignale und damit dem Aufheizen der Siegelwalze führen kann. Außerdem bedingt die Verwendung von Widerstandsheizungen eine hohe thermische Masse, um eine gleichmäßige Temperaturverteilung zu erreichen. Die Temperaturregelung ist daher träge. Schließlich sind Heizpatronen Verschleißteile, die nach einer bestimmten Anzahl von Betriebsstunden ausgetauscht werden müssen. Da sich durch ständiges Aufheizen und Abkühlen Spaltkorrosion bildet, ist ein einfacher, zerstörungsfreier Austausch häufig nicht möglich.

Aus US 4,657,625, die den nächstkommenden Stand der Technik bildet, ist eine Siegelwalze mit feststehender innen liegender Welle und einem um die Welle drehbar gelagerten, induktiv beheizbaren Walzenmantel bekannt, wobei in einem axialen Teilabschnitt der Siegelwalze zwischen dem Walzenmantel und der Welle ein Hohlraum existiert, der mit einem zur Kühlung verwendeten Öl teilweise befüllt ist.

US 2,912,556 offenbart eine beheizbare Walze, wobei die Beheizung elektrisch mit Hilfe von Heizspiraldrähten erfolgt, die um einen in der Walze angeordneten Zylinder gewickelt sind. Zur Messung der Temperatur der Walze kommen Temperaturmessfühler zum Einsatz, die in eigens dafür vorgesehenen Bohrungen in der Walze angeordnet sind.

US 2,273,423 beschreibt eine mit induktiven Mitteln beheizbare Walze, mit einer stationären Welle und einem um die Welle drehbar gelagerten Walzenmantel. Zwischen dem Walzenmantel und einer entsprechenden Induktionsanordnung existiert ein Luftspalt, in dem eine Isolierung zur Eindämmung der Wärmeübertragung zwischen Walzenmantel und der Induktionsanordnung angeordnet ist.

Aus der EP 2 559 540 ist eine Siegewalze mit einem induktiv beheizbaren Walzenmantel und einer Welle bekannt, wobei zwischen der Welle und dem Walzenmantel ein Mohlromen ausgebildet ist und wobei am Walzenmantel ein Temperatursensor eingebaut ist.

Der vorliegenden Erfindung liegt die Aufgabe zugrunde, eine Siegelwalze zu schaffen, die lediglich einen geringen Wartungsaufwand verursacht und auch im Dauerbetrieb eine sichere Funktion und gleichmäßige Temperaturverteilung gewährleistet.

Diese Aufgabe wird durch die Merkmale des Anspruchs 1 gelöst.

Erfindungsgemäß umfasst die Siegelwalze eine starre innen liegende Welle und einen um die Welle drehbar gelagerten, induktiv erwärmbaren Walzenmantel. Eine Mehrzahl von Induktionsspulen ist über radial nach außen offene Ferrite um die Welle gewickelt, wobei die Kabel für die Induktionsspulen zur Verbindung mit einem externen Induktionsgenerator in einem Kabelkanal in der Welle geführt sind. Außerdem ist mindestens ein Wasserkühlungskanal in der Welle angeordnet, der zur indirekten Kühlung der Induktionsspulen dient.

Überprüfen der Temperatur des Walzenmantels und somit zur Überprüfung der Funktion der Siegelwalze in einem axialen Teilabschnitt der Siegelwalze zwischen dem Walzenmantel und der Welle ein Hohlraum ausgebildet, in dem oder angrenzend an den eine Temperaturerfassungsvorrichtung zum Erfassen der Temperatur des Walzenmantels angeordnet ist, die einen IR-Temperatursensor aufweist.

Mit dieser Ausgestaltung wird eine dauerhafte und gleichmäßige Erhitzung des Siegelmantels erreicht, wobei gleichzeitig die Lebensdauer der einzelnen Komponenten sehr hoch ist und auch im Dauerbetrieb eine hervorragende Funktion der Siegelwalze gewährleistet bleibt.

Bevorzugt weist der Walzenmantel einen radial außen liegenden Siegelmantel und ein damit verbundenes innen liegendes Wärmeverteilungselement aus einem gut wärmeleitfähigen Material auf. Hierdurch wird die Leistung der Siegelwalze weiter erhöht.

Da der Siegelmantel ein Verschleißteil ist, ist es vorteilhaft, wenn der Siegelmantel und das Wärmeverteilungselement lösbar aneinander anliegen.

Um die Aufheizung des Wärmeverteilungselements durch Induktion zu unterstützen, sind vorzugsweise dünne ferritische Rohrelemente in das Wärmeverteilungselement eingesetzt.

Insgesamt ist es von Vorteil, wenn der Wasserkühlungskanal einen zirkulierenden Kreislauf definiert. Der Wasserkühlungskanal ist dabei vorzugsweise in einer Bohrung der Welle ausgebildet.

Besonders bevorzugt ist ein Rohr in der Bohrung der Welle angeordnet, das einen kleineren Außendurchmesser aufweist als der Durchmesser der Bohrung, und der Wasserkühlungskanal weist somit einen Zulaufkanal und einen in einem Endbereich des Rohrs mit diesem verbundenen Rücklaufkanal für das Kühlwasser auf. Auf diese Weise wird die Wasserkühlung der Induktionsspulen besonders effektiv umgesetzt.

Die Ferrite sind vorzugsweise als U-Ferrite oder W-Ferrite ausgebildet. Durch die seitlichen Schenkel dieser Ferritformen wird eine nach radial nach außen gerichtete Erstreckung des von den Induktionsspulen erzeugten Magnetfelds erzielt bzw. eine Verdichtung der Magnetfeldlinien in Richtung des Wärmeverteilungselements.

Zum Verhindern einer ungewünschten Überhitzung der Induktionsspulen ist vorzugsweise an der Oberfläche jeder Induktionsspule ein Temperaturschalter angeordnet.

Die Kabel für die Temperaturschalter sind zur Verbindung mit dem externen Induktionsgenerator vorzugsweise in dem Kabelkanal in der Welle geführt. Auf diese Weise können einzelne Spulen leicht ausgetauscht werden, falls es zu einem Ausfall kommt.

Der IR-Temperatursensormuss nicht unmittelbar im Bereich des Hohlraums angeordnet sein, sondern vorzugsweise umfasst die Temperaturerfassungsvorrichtung außerdem einen in einem Messkanal der Welle angeordneten Umlenkspiegel, der die vom Walzenmantel durch den Hohlraum ausgesendete Strahlung durch den Messkanal nach außen leitet, wo der IR-Temperatursensor in einem axialen Randbereich der Welle angeordnet ist. Auf diese Weise ist der IR-Temperatursensor von äußeren Einflüssen entkoppelt und vor zu starker Wärmebelastung geschützt.

Weitere Vorteile und Merkmale der vorliegenden Erfindung ergeben sich aus der nachfolgenden Beschreibung unter Bezugnahme auf die Zeichnungen.
- Fig. 1: ist eine schematische Ansicht einer typischen Einbausituation einer erfindungsgemäßen Siegelwalze in einer Siegelstation für Blisterverpackungen;
- Fig. 2: ist ein Längsschnitt durch eine Ausführungsform der erfindungsgemäßen Siegelwalze; und
- Fig. 3: ist ein Querschnitt durch die Ausführungsform der erfindungsgemäßen Siegelwalze aus Fig. 2.

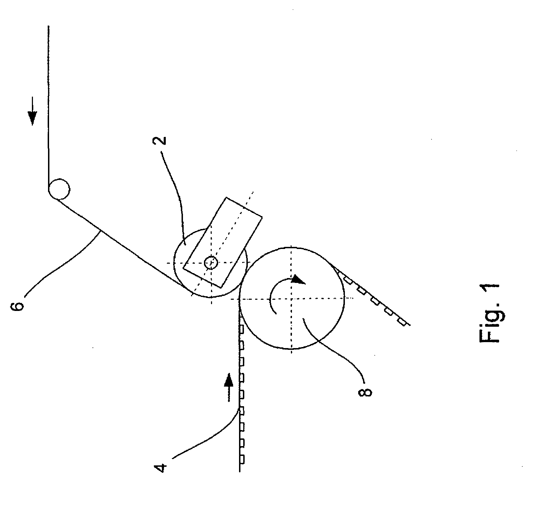

In Fig. 1 ist eine Siegelstation für Blisterverpackungen dargestellt, bei der die erfindungsgemäße Siegelwalze 2 üblicherweise Anwendung findet. In einer solchen Siegelstation werden eine mit gefüllten Näpfen ausgestattete Bodenfolie 4 (üblicherweise aus PVC) und eine Deckfolie 6 (üblicherweise aus Aluminium) zwischen einer Vorschubwalze 8 und der Siegelwalze 2 unter Druck versiegelt. Die Siegelwalze 2 wird hierbei erhitzt, um eine gleichmäßige Versiegelung zu gewährleisten.

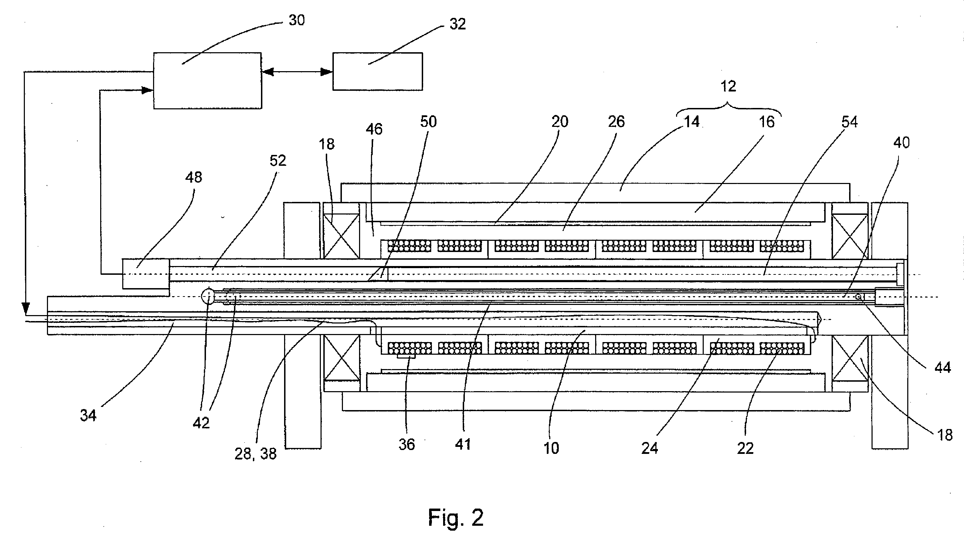

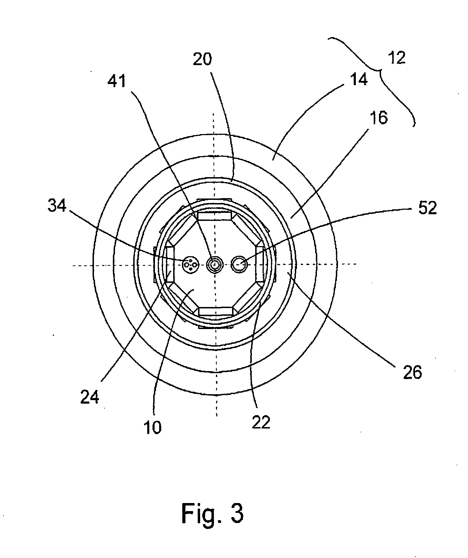

Wie in Fig. 2 und 3 dargestellt ist, umfasst die erfindungsgemäße Siegelwalze 2 zunächst eine innen liegende, feststehende Welle 10. Das Material der Welle 10 ist üblicherweise Edelstahl. Die Siegelwalze 2 umfasst außerdem einen um die Welle 10 drehbar gelagerten Walzenmantel 12.

Der Walzenmantel 12 weist einen radial außen liegenden Siegelmantel 14 auf, der vorzugsweise als Hohlzylinder ausgebildet ist. Das Material des Siegelmantels 14 ist üblicherweise ferritischer Stahl. Der Walzenmantel 12 kann (nicht dargestellt) in einer Ausführungsform nur aus dem Siegelmantel 14 gebildet sein, da dieser bereits ferritisch ist und somit induktiv erwärmt werden kann.

Vorzugsweise weist der Walzenmantel 12 aber außerdem ein mit dem Siegelmantel 14 verbundenes innen liegendes Wärmeverteilungselement 16 auf. Auch das Wärmeverteilungselement 16 ist vorzugsweise als Hohlzylinder ausgebildet und liegt unmittelbar an dem Siegelmantel 14 an, um eine gute Wärmeübertragung zu gewährleisten. Besonders bevorzugt ist es, wenn die Verbindung zwischen Siegelmantel 14 und Wärmeverteilungselement 16 lösbar ist, da dann ein einfacher Austausch des Siegelmantels 14, der ein Verschleißteil bildet, möglich ist. Bei der Verbindung von Siegelmantel 14 und Wärmeverteilungselement 16 wird ausgenutzt, dass Stahl einen kleineren Wärmedehnungskoeffizienten aufweist als Aluminium oder Kupfer. Auf diese Weise sind Siegelmantel 14 und Wärmeverteilungselement 16, die bei Zimmertemperatur relativ zueinander verschoben werden können und somit voneinander lösbar sind, bei heißer Siegelwalze 2 fest miteinander verspannt.

Der Walzenmantel 12 ist vorzugsweise über ein herkömmliches Lager 18 drehbar auf der Welle 10 gelagert. In diesem Bereich ist die Welle 10 zylindrisch ausgestaltet.

Das gut Wärme leitende Material des Wärmeverteilungselements 16 ist vorzugsweise Aluminium oder Kupfer. In das Wärmeverteilungselement 16 sind an seiner Innenseite dünne ferritische Rohrelemente 20 eingesetzt, die die Wärme an das Wärmeverteilungselement 16 übertragen.

Die Siegelwalze 2 weist außerdem eine Mehrzahl von Induktionsspulen 22 auf, die um die Welle 10 herum angeordnet sind. Die Induktionsspulen 22 sind hierzu über radial nach außen offene Ferrite 24 um die Welle 10 herum angeordnet. Die Ferrite 24 können mit der Welle 10 beispielsweise über eine Wärmeleitpaste verbunden sein. Es ist auch möglich, zwischen diesen Bauteilen eine feste Verbindung vorzusehen, die aber in jedem Fall eine gute Wärmeleitfähigkeit aufweisen muss.

Wie aus Fig. 3 ersichtlich ist, ist die Welle 10 im Bereich der Ferrite 24 mit einem eckigen Umfang versehen, damit als Ferrite 24 U-förmige oder W-förmige Ferrite mit gerader Basis verwendet werden können. Im dargestellten Beispielsfall (siehe Fig. 2) sind die Ferrite 24 als W-Ferrite ausgestaltet, deren Schenkel radial nach außen zeigen.

Wie aus Fig. 3 ersichtlich ist, sind die Induktionsspulen 22 konzentrisch um die Welle 10 herum angeordnet. Zwischen den Induktionsspulen 22 und dem Walzenmantel 12 ist ein mit Luft gefüllter Zwischenraum 26 vorgesehen.

Die Induktionsspulen 22 sind über Kabel 28 mit einem außerhalb der Siegelwalze 2 angeordneten Induktionsgenerator 30 verbunden. Der Induktionsgenerator 30 erhält die Vorgaben für die Produktion der Maschine von einer Regeleinrichtung 32 und steuert die Induktionsspulen 22. Die wichtigste Vorgabe ist die Temperaturvorgabe für die Siegelwalze 2, die von der Maschinenleistung und der verwendeten Folienkombination abhängt.

Die Kabel 28 für die Induktionsspulen 22 sind in einem axial verlaufenden Kabelkanal 34 in der Welle 10 geführt. Der Kabelkanal 34 kann eine rohrförmige Ausgestaltung aufweisen.

Schließlich ist an der Oberfläche jeder Induktionsspule 22 ein Temperaturschalter 36 angeordnet, der über weitere Kabel 38, die ebenfalls im Kabelkanal 34 in der Welle 10 geführt sind, mit dem externen Induktionsgenerator 30 verbunden ist.

Die Temperaturschalter 36 sind als Bimetall-Schalter ausgeführt, die die Spannung des Induktionsgenerators 30 bei Erreichen der Schaltschwelle über ein Schütz unterbrechen, so dass ein selbständiges Wiedereinschalten des Induktionsgenerators 30 verhindert wird.

Die Temperatur der Siegelwalze 2 am Siegelmantel 14 kann im Betrieb durchaus 260° C betragen. Daher umfasst die Siegelwalze 2 mindestens einen Wasserkühlungskanal 40, der in der Welle 10 angeordnet ist und zur indirekten Kühlung der Induktionsspulen 22 über die Welle 10 und die Ferrite 24 dient. Im dargestellten Beispielsfall erstreckt sich der Wasserkühlungskanal 40 ebenfalls in axialer Richtung durch die Welle 10.

Der Wasserkühlungskanal 40 sollte vorzugsweise einen zirkulierenden Kreislauf definieren. In der hier dargestellten bevorzugten Ausführungsform ist der Wasserkühlungskanal 40 in einer Bohrung der Welle 10 ausgebildet. Ein Rohr 41 kann in die Bohrung der Welle 10 eingefügt sein, das einen kleineren Außendurchmesser aufweist als der Durchmesser der Bohrung. Damit umfasst der Wasserkühlungskanal 40 einen innen laufenden Zulaufkanal und einen in einem Endbereich des Rohrs 41 mit diesem verbundenen, radial weiter außen liegenden Rücklaufkanal für das Kühlwasser oder umgekehrt. Aus Fig. 3 sind die zwei Kanäle des Wasserkühlungskanals 40 ersichtlich. In Fig. 2 erkennt man die Zulauf- und Auslassöffnungen 42 des Wasserkühlungskanals 40 für den externen Wasseranschluss sowie die Durchtrittsöffnung 44 am anderen Endbereich des Rohrs 41 zur Verbindung des Zulaufkanals mit dem Rücklaufkanal. Selbstverständlich sind viele andere Ausgestaltungen und Geometrien des Wasserkühlungskanals 40 in der Welle 10 denkbar.

In einem axialen Teilabschnitt der Siegelwalze 2 ist zwischen dem Walzenmantel 12, hier genauer dem Wärmeverteilungselement 16, und der Welle 10 ein Hohlraum 46 ausgebildet, in welchem oder angrenzend an welchen eine Temperaturerfassungsvorrichtung zum Erfassen der Temperatur des Walzenmantels 12 angeordnet ist. Vorzugsweise ist dieser sich radial erstreckende Hohlraum 46 mit dem oben beschriebenen Zwischenraum 26 zwischen den Induktionsspulen 22 und dem Walzenmantel 12 verbunden.

Durch diesen Hohlraum 46 hindurch wird vom Wärmeverteilungselement 16 Strahlung ausgesendet, die schließlich durch einen IR-Temperatursensor 48 detektiert und ausgewertet wird, womit eine Temperaturerfassung des Walzenmantels 12 möglich ist. Der IR-Temperatursensor 48 ist im dargestellten Beispielsfall axial am Rand der Welle 10 angeordnet, könnte aber auch unmittelbar im Bereich des Hohlraums 46 angeordnet sein. Die hier dargestellte Anordnung hat jedoch den Vorteil, dass äußere Einflüsse auf das Messergebnis ausgeschlossen werden und die Trägheit der Regelstrecke minimiert wird.

Um die Strahlung zum entfernt angeordneten IR-Temperatursensor 48 zu leiten, umfasst die Temperaturerfassungsvorrichtung daher neben dem IR-Temperatursensor 48 in der bevorzugten Ausgestaltung noch einen Umlenkspiegel 50, der in einem axial verlaufenden Messkanal 52 der Welle 10 angeordnet ist. Im Bereich zwischen dem Umlenkspiegel 50 und dem IR-Temperatursensor 48 ist der Messkanal 52 vorzugsweise mit Luft befüllt. Der Umlenkspiegel 50 kann an einem Stab 54 befestigt sein, der im Beispiel der Fig. 2 zu Servicezwecken nach rechts aus der Welle 10 herausgezogen werden kann.

## Patentansprüche

1. Siegelwalze (2) mit
einer feststehenden innen liegenden Welle (10),
einem um die Welle (10) drehbar gelagerten, induktiv erwärmbaren Walzenmantel (12),
einer Mehrzahl von Induktionsspulen (22), die über nach außen offene Ferrite (24) um die Welle (10) gewickelt sind, wobei die Kabel (28) für die Induktionsspulen (22) zur Verbindung mit einem externen Induktionsgenerator (30) in einem Kabelkanal (34) in der Welle (10) geführt sind, und
mindestens einem Wasserkühlungskanal (40), der in der Welle (10) angeordnet ist und zur indirekten Kühlung der Induktionsspulen (22) dient,
wobei in einem axialen Teilabschnitt der Siegelwalze (2) zwischen Walzenmantel (12) und Welle (10) ein Hohlraum (46) ausgebildet ist,
**dadurch gekennzeichnet, dass**
in diesem oder angrenzend an diesen Hohlraum (46) eine Temperaturerfassungsvorrichtung (48, 50) zum Erfassen der Temperatur des Walzenmantels (12) angeordnet ist, die einen IR-Temperatursensor (48) aufweist.

2. Siegelwalze (2) nach Anspruch 1, **dadurch gekennzeichnet, dass** der Walzenmantel (12) einen radial außen liegenden Siegelmantel (14) und ein damit verbundenes Wärmeverteilungselement (16) aus einem gut wärmeleitfähigen Material aufweist.

3. Siegelwalze (2) nach Anspruch 2, **dadurch gekennzeichnet, dass** der Siegelmantels (14) und das Wärmeverteilungselement (16) lösbar aneinander anliegen.

4. Siegelwalze (2) nach Anspruch 2 oder 3, **dadurch gekennzeichnet, dass** in das Wärmeverteilungselement (16) dünne ferritische Rohrelemente (20) eingesetzt sind.

5. Siegelwalze (2) nach einem der vorangehenden Ansprüche, **dadurch gekennzeichnet, dass** der Wasserkühlungskanal (40) einen zirkulierenden Kreislauf definiert.

6. Siegelwalze (2) nach einem der vorangehenden Ansprüche, **dadurch gekennzeichnet, dass** der Wasserkühlungskanal (40) in einer Bohrung der Welle (10) ausgebildet ist.

7. Siegelwalze (2) nach Anspruch 6, **dadurch gekennzeichnet, dass** ein Rohr (41) in der Bohrung der Welle (10) angeordnet ist, das einen kleineren Außendurchmesser aufweist als der Durchmesser der Bohrung, und der Wasserkühlungskanal (40) somit einen Zulaufkanal und einen in einem Endbereich des Rohrs (41) mit diesem verbundenen Rücklaufkanal für das Kühlwasser aufweist.

8. Siegelwalze (2) nach einem der vorangehenden Ansprüche, **dadurch gekennzeichnet, dass** die Ferrite (24) als U-Ferrite oder W-Ferrite ausgebildet sind.

9. Siegelwalze (2) nach einem der vorangehenden Ansprüche, **dadurch gekennzeichnet, dass** an der Oberfläche jeder Induktionsspule (22) ein Temperaturschalter (36) angeordnet ist.

10. Siegelwalze (2) nach Anspruch 9, **dadurch gekennzeichnet, dass** die Kabel (38) für die Temperaturschalter (36) zur Verbindung mit dem externen Induktionsgenerator (30) in dem Kabelkanal (34) in der Welle (10) geführt sind.

11. Siegelwalze (2) nach einem der vorangehenden Ansprüche, **dadurch gekennzeichnet, dass** die Temperaturerfassungsvorrichtung (48, 50) außerdem einen in einem Messkanal (52) der Welle (10) angeordneten Umlenkspiegel (50) aufweist, der die vom Walzenmantel (12) durch den Hohlraum (46) ausgesendete Strahlung durch den Messkanal (52) nach außen leitet, und dass der IR-Temperatursensor (48) in einem axialen Randbereich der Welle (10) angeordnet ist.

## Claims

1. Sealing roller (2) with a stationary inner shaft (10),
an inductively heatable roller sleeve (12) which is mounted to rotate about the shaft (10),
a plurality of induction coils (22) which are wound around the shaft (10) via outwardly open ferrites (24), wherein the cables (28) for the induction coils (22) are guided in a cable duct (34) in the shaft (10) for connection to an external induction generator (30), and
at least one water-cooling channel (40) which is arranged in the shaft (10) and serves for the indirect cooling of the induction coils (22),
wherein a hollow cavity (46) is formed in an axial portion of the sealing roller (2) between the roller sleeve (12) and the shaft (10),
**characterised in that**
a temperature detection device (48, 50) which has an IR temperature sensor (48) for detecting the temperature of the roller sleeve (12) is arranged in or adjoining this hollow cavity (46).

2. Sealing roller (2) according to claim 1 **characterised in that** the roller sleeve (12) has a sealing sleeve (14) radially on the outside, and a heat distribution element (16) of good heat-conducting material connected thereto.

3. Sealing roller (2) according to claim 2 **characterised in that** the sealing sleeve (14) and the heat distribution element (16) detachably adjoin one another.

4. Sealing roller (2) according to claim 2 or 3 **characterised in that** thin ferrite tubular elements (20) are inserted in the heat distribution element (16).

5. Sealing roller (2) according to one of the preceding claims **characterised in that** the water cooling channel (40) defines a circulating circuit.

6. Sealing roller (2) according to one of the preceding claims **characterised in that** the water cooling channel (40) is formed in a bore of the shaft (10).

7. Sealing roller (2) according to claim 6 **characterised in that** a tube (41) is arranged in the bore of the shaft (10) and has a smaller external diameter than the diameter of the bore, and the water cooling channel (40) thus has an inlet channel and a return channel for the cooling water which is connected to the tube(41) in an end region thereof.

8. Sealing roller (2) according to one of the preceding claims **characterised in that** the ferrites (24) are formed as U-ferrites or W-ferrites.

9. Sealing roller (2) according to one of the preceding claims **characterised in that** a temperature switch (36) is arranged on the surface of each induction coil (22).

10. Sealing roller (2) according to claim 9 **characterised in that** the cables for the temperature switch (36) are guided in the cable channel (34) in the shaft (10) for connecting to the external induction generator (30).

11. Sealing roller (2) according to one of the preceding claims **characterised in that** the temperature detection device (48, 50) furthermore has a deflection mirror (50) which is arranged in a measuring channel (52) of the shaft (10) and which diverts the rays sent out from the roller sleeve (12) through the hollow cavity (46) outwards through the measuring channel (52), and that the IR temperature sensor (48) is arranged in an axial edge region of the shaft (10).

## Revendications

1. Rouleau de scellement (2) comprenant
un arbre (10) immobile situé à l'intérieur,
une enveloppe de rouleau (12) supportée avec possibilité de rotation autour de l'arbre (10) et pouvant être chauffée par induction,
une pluralité de bobines d'induction (22) qui sont enroulées autour de l'arbre (10) par des ferrites (24) ouverts vers l'extérieur, les câbles (28) pour les bobines d'induction (22) pour liaison à un générateur d'induction (30) externe étant guidés dans un canal de câble (34) dans l'arbre (10), et
au moins un canal de refroidissement à eau (40) qui est disposé dans l'arbre (10) et qui sert au refroidissement indirect des bobines d'induction (22),
un espace creux (46) étant réalisé dans une section partielle axiale du rouleau de scellement (2) entre l'enveloppe de rouleau (12) et l'arbre (10),
**caractérisé en ce**
**qu'**un dispositif de détection de température (48, 50) pour détecter la température de l'enveloppe de rouleau (12) est disposé dans l'espace creux (46) ou de manière adjacente à celui-ci, lequel dispositif de détection de température présente un capteur de température IR (48).

2. Rouleau de scellement (2) selon la revendication 1, **caractérisé en ce que** l'enveloppe de rouleau (12) présente une enveloppe de scellement (14) située radialement côté extérieur et un élément de répartition de chaleur (16) relié à celle-ci composé d'un matériau présentant une bonne conductivité thermique.

3. Rouleau de scellement (2) selon la revendication 2, **caractérisé en ce que** l'enveloppe de scellement (14) et l'élément de répartition de chaleur (16) reposent l'un contre l'autre de manière amovible.

4. Rouleau de scellement (2) selon la revendication 2 ou 3, **caractérisé en ce que** des éléments tubulaires (20) ferritiques minces sont insérés dans l'élément de répartition de chaleur (16).

5. Rouleau de scellement (2) selon l'une quelconque des revendications précédentes, **caractérisé en ce que** le canal de refroidissement à eau (40) définit un circuit de mise en circulation.

6. Rouleau de scellement (2) selon l'une quelconque des revendications précédentes, **caractérisé en ce que** le canal de refroidissement à eau (40) est réalisé dans un alésage de l'arbre (10).

7. Rouleau de scellement (2) selon la revendication 6, **caractérisé en ce qu'**un tube (41) est disposé dans l'alésage de l'arbre (10), lequel présente un diamètre extérieur plus petit que le diamètre de l'alésage, et **en ce que** le canal de refroidissement à eau (40) présente ce faisant pour l'eau de refroidissement un canal d'arrivée et un canal de reflux relié à celui-ci dans une zone d'extrémité du tube (41).

8. Rouleau de scellement (2) selon l'une quelconque des revendications précédentes, **caractérisé en ce que** les ferrites (24) sont réalisés sous la forme de ferrites de type U ou de ferrites de type W.

9. Rouleau de scellement (2) selon l'une quelconque des revendications précédentes, **caractérisé en ce qu'**un commutateur de température (36) est disposé à la surface de chaque bobine d'induction (22).

10. Rouleau de scellement (2) selon la revendication 9, **caractérisé en ce que** les câbles (38) pour les commutateurs de température (36) pour liaison au générateur d'induction (30) externe sont guidés dans le canal de câble (34) dans l'arbre (10).

11. Rouleau de scellement (2) selon l'une quelconque des revendications précédentes, **caractérisé en ce que** le dispositif de détection de température (48, 50) présente par ailleurs un miroir de renvoi (50) disposé dans un canal de mesure (52) de l'arbre (10), lequel miroir dirige le rayonnement émis par l'enveloppe de rouleau (12) à travers l'espace creux (46) à travers le canal de mesure (52) vers l'extérieur, et **en ce que** le capteur de température IR (48) est disposé dans une zone de bord axiale de l'arbre (10).
